(19) Europäisches Patentamt
European Patent Office
Office européen des brevets

(11) EP 2 869 432 A1

(12) **EUROPEAN PATENT APPLICATION**
published in accordance with Art. 153(4) EPC

(43) Date of publication:
06.05.2015 Bulletin 2015/19

(51) Int Cl.:
H02J 17/00 (2006.01)    H01M 10/46 (2006.01)
H02J 7/00 (2006.01)

(21) Application number: 14770460.5

(22) Date of filing: 10.02.2014

(86) International application number:
PCT/JP2014/053066

(87) International publication number:
WO 2014/148143 (25.09.2014 Gazette 2014/39)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 19.03.2013 JP 2013056948

(71) Applicant: Nitto Denko Corporation
Ibaraki-shi, Osaka 567-8680 (JP)

(72) Inventors:
• HATANAKA, Takezo
Ibaraki-shi
Osaka 567-8680 (JP)
• TSUDA, Hisashi
Ibaraki-shi
Osaka 567-8680 (JP)

(74) Representative: Müller-Boré & Partner
Patentanwälte PartG mbB
Friedenheimer Brücke 21
80639 München (DE)

(54) **WIRELESS POWER TRANSMISSION DEVICE, METHOD FOR CONTROLLING HEAT GENERATED BY WIRELESS POWER TRANSMISSION DEVICE, AND PRODUCTION METHOD FOR WIRELESS POWER TRANSMISSION DEVICE**

(57) In the wireless power transmission apparatus (1), in which power is supplied by resonance phenomenon from a power-supplying module (2) to a power-receiving module (3) that is connected to a lithium ion secondary battery (9) capable of being charged by a constant current/constant voltage charging system, a variable parameter, which constitutes the power supply module and the power receiving module, is set such that the transmission characteristic value for the drive frequency of power supplied to the power-supplying module (2) exhibits double-hump characteristics. Thus, adjustment of the drive frequency sets the variation tendencies of the input impedance (Zin) of the wireless power transmission apparatus (1) during constant voltage charging to adjust the variation tendencies of the input current ($I_{in}$) of the wireless power transmission apparatus (1), and enables the heat generated by the wireless power transmission apparatus (1) to be controlled.

FIG.2

EP 2 869 432 A1

## Description

Technical Field

The present invention relates to a wireless power transmission apparatus, and a thermal control method and a manufacturing method for the wireless power transmission apparatus.

Background Art

Portable electronic devices such as laptop PCs, tablet PCs, digital cameras, mobile phones, portable gaming devices, earphone-type music players, wireless headsets, hearing aids, recorders, which are portable while being used by the user are rapidly increasing in recent years. Many of these portable electronic devices have therein a rechargeable battery, which requires periodical charging. To facilitate the work for charging the rechargeable battery of an electronic device, there are an increasing number of devices for charging rechargeable batteries by using a power-supplying technology (wireless power transmission technology performing power transmission by varying the magnetic field) that performs wireless power transmission between a power-supplying device and a power-receiving device mounted in an electronic device.

Examples of such a wireless power transmission technology includes: a technology that performs power transmission by means of electromagnetic induction between coils (e.g. see PTL 1) and a technology that performs power transmission by means of resonance phenomena (magnetic field resonant state) between resonators provided to the power-supplying device (coil) and the power-receiving device (e.g. see PTL 2).

Further, a constant current/constant voltage charging system is known as the system of charging a rechargeable battery (e.g. , lithium ion secondary battery) . However, in cases of charging a lithium ion secondary battery with a constant current/constant voltage charging system, in a wireless power transmission apparatus that performs the wireless power transmission, the value of input current to the wireless power transmission apparatus varies with an increase in the load impedance of a power-supplied electronic device (rechargeable battery, stabilizer circuit, charging circuit, and the like) including the rechargeable battery, when transition occurs from constant current charging to constant voltage charging.

This variation in the value of input current to the wireless power transmission apparatus causes variation in the power consumed in the wireless power transmission apparatus, leading to variation in the amount of heat generated in the entire wireless power transmission apparatus. An increase in the amount of heat generated in the wireless power transmission apparatus shortens the life of electronic components structuring the wireless power transmission apparatus.

To address the above-described issue, a conceivable approach is to separately provide an adjuster or the like to enable adjustment of the input current to the wireless power transmission apparatus or input impedance $Z_{in}$ of the wireless power transmission apparatus, when transition occurs from the constant current charging to the constant voltage charging.

Citation List

Patent Literature

[PTL 1] Japanese patent No. 4624768
[PTL2] Japanese Unexamined Paten Publication No. 239769/2010

Summary of Invention

Technical Problem

However, considering that the mobility, compactness, and cost cutting are required for portable electronic devices, it is inconvenient to separately provide an adjuster, because doing so will increase the number of components.

In other words, the adjustment of the value of input current to the wireless power transmission apparatus at a time of transition from the constant current charging to the constant voltage charging is done without additional device, in the wireless power transmission apparatus (power-supplying device and power-receiving device) used for portable electronic devices.

It is therefore an obj ect of the present invention is to provide a thermal control method and the like to enable control of heat generation in the wireless power transmission apparatus, by enabling adjustment of the value of input current to the wireless power transmission apparatus, without a need of an additional device, at a time of transition from the constant current charging to the constant voltage charging.

Technical Solution

An aspect of the present invention to achieve the above object is a thermal control method for a wireless power transmission apparatus which supplies power, by means of resonance phenomenon, from a power-supplying module having at least a power-supplying coil and a power-supplying resonator to a power-receiving module having at least power-receiving resonator and a power-receiving coil, and connected to a power-supplied electronic device having a secondary battery rechargeable with a use of a constant current/constant voltage charging system, comprising:

setting variable parameters configuring the power-supplying module and the power-receiving module so that a value of transmission characteristic relative to a drive frequency of the power supplied to the power-supplying module has a double-hump characteristic has a peak in a lower drive frequency band than a resonance frequency in the power-supplying module and the power-receiving module, and a peak in a higher drive frequency band than the resonance frequency, thereby
enabling control of heat generation in the wireless power transmission apparatus, by adjusting the drive frequency to set a variation tendency in input impedance values of the wireless power transmission apparatus to adjust variation tendency of the input current to the wireless power transmission apparatus, at a time of constant voltage charging.

In the above method for cases where a wireless power transmission apparatus configured to supply power by means of resonance phenomenon is used to charge a secondary battery rechargeable with a use of a constant current/constant voltage charging system, variable parameters configuring the power-supplying module and the power-receiving module in the wireless power transmission apparatus are set so that the value of transmission characteristic with respect to the drive frequency of the power supplied to the power-supplying module has a double-hump characteristic having a peak in a lower drive frequency band than a resonance frequency in the power-supplying module and the power-receiving module, and a peak in a higher drive frequency band than the resonance frequency. This enables control of heat generation in the wireless power transmission apparatus, by adjusting the drive frequency of power supplied to such a wireless power transmission apparatus with the double-hump characteristic, to set the variation tendency in the input impedance values of the wireless power transmission apparatus thus adjusting the variation tendency in the input current to the wireless power transmission apparatus, at a time of constant voltage charging.
Another aspect of the present invention is the thermal control method for a wireless power transmission apparatus, adapted so that the drive frequency of the power supplied to the power-supplying module is set to a band corresponding to a peak value of the transmission characteristic occurring in the lower drive frequency band than the resonance frequency in the power-supplying module and the power-receiving module, and the input impedance value of the wireless power transmission apparatus at a time of constant voltage charging is adjusted to have a tendency to rise.
In the above method, the drive frequency of the power supplied to the power-supplying module is set to a band corresponding to a peak value of the transmission characteristic occurring in the lower drive frequency band than the resonance frequency in the power-supplying module and the power-receiving module. This way, the input impedance value of the wireless power transmission apparatus at a time of constant voltage charging is adjustable to have a tendency to rise. This reduces the input current to the wireless power transmission apparatus, at a time of constant voltage charging, consequently reducing generation of heat in the wireless power transmission apparatus.
Another aspect of the present invention is the thermal control method for a wireless power transmission apparatus, adapted so that the drive frequency of the power supplied to the power-supplying module is set to a band corresponding to a peak value of the transmission characteristic occurring in the higher drive frequency band than the resonance frequency in the power-supplying module and the power-receiving module, and the input impedance value of the wireless power transmission apparatus at a time of constant voltage charging is adjusted to have a tendency to rise.
In the above method, the drive frequency of the power supplied to the power-supplying module is set to a band corresponding to a peak value of the transmission characteristic occurring in the higher drive frequency band than the resonance frequency in the power-supplying module and the power-receiving module. This way, the input impedance value of the wireless power transmission apparatus at a time of constant voltage charging is adjustable to have a tendency to rise. This reduces the input current to the wireless power transmission apparatus, at a time of constant voltage charging, consequently reducing generation of heat in the wireless power transmission apparatus.
Another aspect of the present invention is the thermal control method for a wireless power transmission apparatus, adapted so that the drive frequency of the power supplied to the power-supplying module is set to a band corresponding to a valley between peak values of the transmission characteristic occurring in the lower drive frequency band and the higher frequency band than the resonance frequency in the power-supplying module and the power-receiving module, and the input impedance value of the wireless power transmission apparatus at a time of constant voltage charging is adjusted to have a tendency to stay the same or fall.

In the above method, the drive frequency of the power supplied to the power-supplying module is set to a band corresponding to valley between peak values of the transmission characteristic occurring in the lower drive frequency band and the higher frequency band than the resonance frequency in the power-supplying module and the power-receiving module. This way, the input impedance value of the wireless power transmission apparatus at a time of constant voltage charging is adjustable to have a tendency to stay the same or fall. This maintains or reduces the input current to the wireless power transmission apparatus, at a time of constant voltage charging.

Another aspect of the present invention is a wireless power transmission apparatus adjusted by the above-described thermal control method for a wireless power transmission apparatus.

The above-described wireless power transmission apparatus enables control of heat generation by adjusting the drive frequency of power supplied to the power-supplying module. In other words, control of heat generation in a wireless power transmission apparatus is possible without a need of an additional component in the wireless power transmission apparatus.

Another aspect of the present invention to achieve the above object is a manufacturing method for a wireless power transmission apparatus which supplies power, by means of resonance phenomenon, from a power-supplying module having at least a power-supplying coil and a power-supplying resonator to a power-receiving module having at least power-receiving resonator and a power-receiving coil, and connected to a power-supplied electronic device having a secondary battery rechargeable with a use of a constant current/constant voltage charging system, comprising:

setting variable parameters configuring the power-supplying module and the power-receiving module so that a value of transmission characteristic relative to a drive frequency of the power supplied to the power-supplying module has a double-hump characteristic has a peak in a lower drive frequency band than a resonance frequency in the power-supplying module and the power-receiving module, and a peak in a higher drive frequency band than the resonance frequency, thereby

enabling control of heat generation in the wireless power transmission apparatus, by adjusting the drive frequency to set a variation tendency in input impedance values of the wireless power transmission apparatus at a time of constant voltage charging to adjust variation tendency of the input current to the wireless power transmission apparatus.

The above-described method enables manufacturing of a wireless power transmission apparatus that allows control of heat generation by adjusting the drive frequency of power supplied to the power-supplying module. In other words, a wireless power transmission apparatus capable of controlling heat generation therein is possible without a need of an additional component in the wireless power transmission apparatus.

Advantageous Effects

There is provided a thermal control method and the like to enable control of heat generation in the wireless power transmission apparatus, by enabling adjustment of the value of input current to the wireless power transmission apparatus, without a need of an additional device, at a time of transition from the constant current charging to the constant voltage charging.

Brief Description of Drawings

[FIG. 1] FIG. 1 is a schematic explanatory diagram of a wireless power transmission apparatus.
[FIG. 2] FIG. 2 is an explanatory diagram of an equivalent circuit of the wireless power transmission apparatus.
[FIG. 3] FIG. 3 is a graph indicating charging characteristic of a lithium ion secondary battery.
[FIG. 4] FIG. 4(A) is a graph indicating current values input to the lithium ion secondary battery and those input to the wireless power transmission apparatus, at a time of constant current/constant voltage charging. FIG. 4(B) is a graph indicating variation in the temperatures of the wireless power transmission apparatus, at a time of constant current/constant voltage charging.
[FIG. 5] FIG. 5 is an explanatory diagram indicating relation of transmission characteristic "S21" to a drive frequency.
[FIG. 6] FIG. 6 is a graph showing a relation of input impedance $Z_{in}$ to a drive frequency.
[FIG. 7] FIG. 7 is a graph showing measurement results related to Measurement Experiment 1.
[FIG. 8] FIG. 8 is a graph showing measurement results related to Measurement Experiment 2.
[FIG. 9] FIG. 9 is a graph showing measurement results related to Measurement Experiment 3.
[FIG. 10] FIG. 10 is an explanatory diagram of a manufacturing method of a wireless power transmission apparatus.

[FIG. 11] FIG. 11 is a flowchart explaining a method for designing a wireless headset and a charger, including the wireless power transmission apparatus.

Description of Embodiments

(Embodiment)

The following describes an embodiment of a wireless power transmission apparatus, a thermal control method and manufacturing method for the wireless power transmission apparatus related to the present invention. First, a wireless power transmission apparatus 1 used in the present embodiment is described.

(Structure of Wireless Power Transmission Apparatus 1)

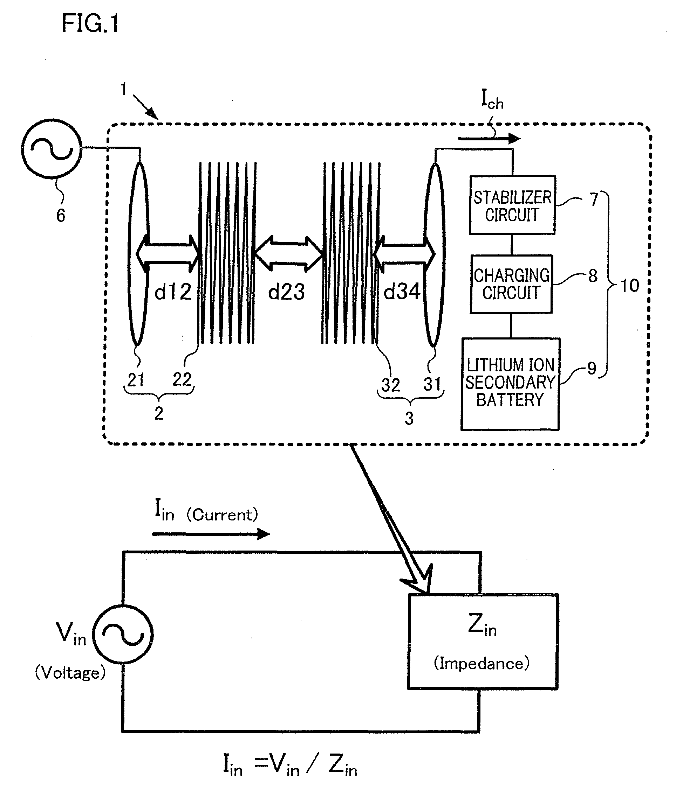

The wireless power transmission apparatus 1 includes: a power-supplying module 2 having a power-supplying coil 21 and a power-supplying resonator 22; and a power-receiving module 3 having a power-receiving coil 31 and the power-receiving resonator 32, as shown in FIG. 1. The power-supplying coil 21 of the power-supplying module 2 is connected to an AC power source 6 having an oscillation circuit configured to set the drive frequency of power supplied to the power-supplying module 2 to a predetermined value. The power-receiving coil 31 of the power-receiving module 3 is connected to a lithium ion secondary battery 9 via a charging circuit 8 configured to prevent overcharge and a stabilizer circuit 7 configured to rectify the AC power received. It should be noted that, in the present embodiment, the stabilizer circuit 7, the charging circuit 8, and the lithium ion secondary battery 9 correspond to a power-supplied electronic device 10.

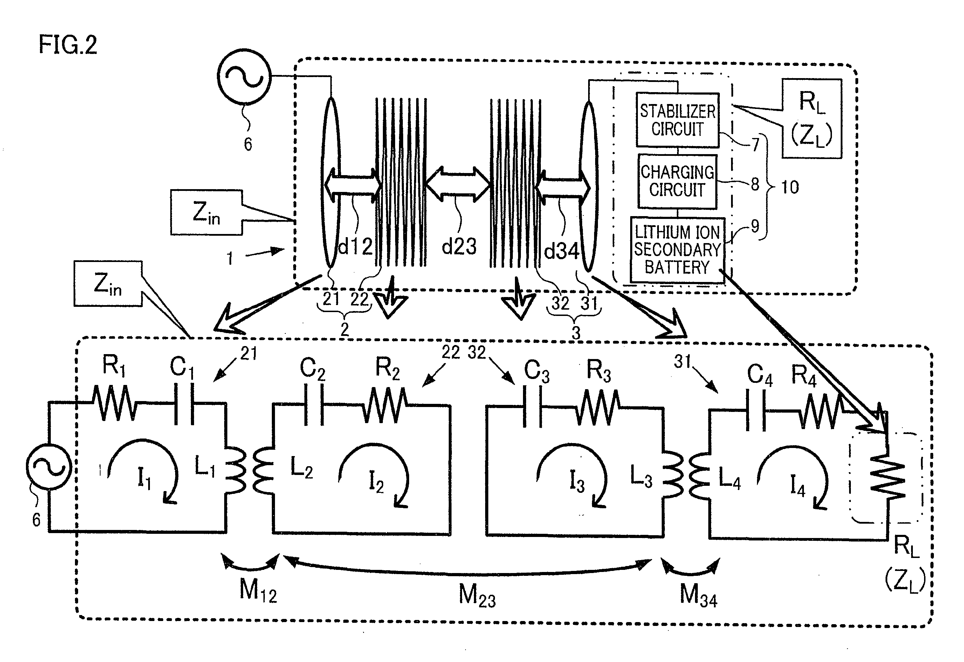

The power-supplying coil 21 plays a role of supplying power obtained from the AC power source 6 to the power-supplying resonator 22 by means of electromagnetic induction. As shown in FIG. 2, the power-supplying coil 21 is constituted by an RLC circuit whose elements include a resistor $R_1$, a coil $L_1$, and a capacitor $C_1$. The coil $L_1$ is formed by winding once a copper wire material (coated by an insulation film) with its coil diameter set to 15 mmϕ. The total impedance of a circuit element constituting the power-supplying coil 21 is $Z_1$. In the present embodiment, the $Z_1$ is the total impedance of the RLC circuit (circuit element) constituting the power-supplying coil 21, which includes the resistor $R_1$, the coil $L_1$, and the capacitor $C_1$. Further, the current that flows in the power-supplying coil 21 is $I_1$. It should be noted that the current $I_1$ is the same as the input current $I_{in}$ to the wireless power transmission apparatus 1.

The power-receiving coil 31 plays roles of receiving the power having been transmitted as a magnetic field energy from the power-supplying resonator 22 to the power-receiving resonator 32, by means of electromagnetic induction, and supplying the power received to the lithium ion secondary battery 9 via the stabilizer circuit 7 and the charging circuit 8. As shown in FIG. 2, the power-receiving coil 31, similarly to the power-supplying coil 21, is constituted by an RLC circuit whose elements include a resistor $R_4$, a coil $L_4$, and a capacitor $C_4$. The coil $L_4$ is formed by winding once a copper wire material (coated by an insulation film) with its coil diameter set to 11 mmϕ. The total impedance of a circuit element constituting the power-receiving coil 31 is $Z_4$. In the present embodiment, the $Z_4$ is the total impedance of the RLC circuit (circuit element) constituting the power-receiving coil 31, which includes the resistor $R_4$, the coil $L_4$, and the capacitor $C_4$. The total impedance of the power-supplied electronic device 10 connected to the power-receiving coil 31 is $Z_L$. Further, the current that flows in the power-receiving coil 31 is $I_4$. The total impedance of the power-supplied electronic device 10 expressed as $Z_L$ may be replaced with $R_L$, for the sake of convenience.

As shown in FIG. 2, the power-supplying resonator 22 is constituted by an RLC circuit whose elements include a resistor $R_2$, a coil $L_2$, and a capacitor $C_2$. Further, as shown in FIG. 2, the power-receiving resonator 32 is constituted by an RLC circuit whose elements include a resistor $R_3$, a coil $L_3$, and a capacitor $C_3$. The power-supplying resonator 22 and the power-receiving resonator 32 each serves as a resonance circuit and plays a role of creating a magnetic field resonant state. The magnetic field resonant state (resonance phenomenon) here is a phenomenon in which two or more coils resonate with each other at a resonance frequency (tuned to a resonance frequency). The total impedance of a circuit element constituting the power-supplying resonator 22 is $Z_2$. In the present embodiment, the $Z_2$ is the total impedance of the RLC circuit (circuit element) constituting the power-supplying resonator 22, which includes the resistor $R_2$, the coil $L_2$, and the capacitor $C_2$. The total impedance of a circuit element constituting the power-receiving resonator 32 is $Z_3$. In the present embodiment, the $Z_3$ is the total impedance of the RLC circuit (circuit element) constituting the power-receiving resonator 32, which includes the resistor $R_3$, the coil $L_3$, and the capacitor $C_3$. Further, the current that flows in the power-supplying resonator 22 is $I_2$, and the current that flows in the power-receiving resonator 32 is $I_3$.

In the RLC circuit which is the resonance circuit in each of the power-supplying resonator 22 and the power-receiving resonator 32, the resonance frequency is f which is derived from (Formula 1) below, where the inductance is L and the capacity of capacitor is C. In the present embodiment, the resonance frequency of the power-supplying coil 21, the power-supplying resonator 22, the power-receiving coil 31, and the power-receiving resonator 32 is set to 970 MHz.

$$f = \frac{1}{2\pi\sqrt{LC}}$$

..... (Formula 1)

The power-supplying resonator 22 is a solenoid coil made of a copper wire material (coated by an insulation film) with its coil diameter being 15 mm$\phi$. The power-receiving resonator 32 is a solenoid coil made of a copper wire material (coated by an insulation film) with its coil diameter being 11 mm$\phi$. The resonance frequency of the power-supplying resonator 22 and that of the power-receiving resonator 32 are matched with each other. The power-supplying resonator 22 and the power-receiving resonator 32 may be a spiral coil or a solenoid coil as long as it is a resonator using a coil.

The distance between the power-supplying coil 21 and the power-supplying resonator 22 is denoted as d12, the distance between the power-supplying resonator 22 and the power-receiving resonator 32 is denoted as d23, and the distance between the power-receiving resonator 32 and the power-receiving coil 31 is denoted as d34 (See FIG. 1).

Further, as shown in FIG. 2, a mutual inductance between the coil $L_1$ of the power-supplying coil 21 and the coil $L_2$ of the power-supplying resonator 22 is $M_{12}$, a mutual inductance between the coil $L_2$ of the power-supplying resonator 22 and the coil $L_3$ of the power-receiving resonator 32 is $M_{23}$, and a mutual inductance between the coil $L_3$ of the power-receiving resonator 32 and the coil $L_4$ of the power-receiving coil 31 is $M_{34}$. Further, in the wireless power transmission apparatus 1, a coupling coefficient between the coil $L_1$ and the coil $L_2$ is denoted as $K_{12}$, a coupling coefficient between the coil $L_2$ and the coil $L_3$ is denoted as $K_{23}$, a coupling coefficient between the coil $L_3$ and the coil $L_4$ is denoted as $K_{34}$,

It should be noted that the resistance value, inductance, capacity of capacitor, and the coupling coefficients $K_{12}$, $K_{23}$, $K_{34}$ in the $R_1$, $L_1$, and $C_1$ of the RLC circuit of the power-supplying coil 21, the $R_2$, $L_2$, and $C_2$ of the RLC circuit of the power-supplying resonator 22, the $R_3$, $L_3$, and $C_3$ of the RLC circuit of the power-receiving resonator 32, the $R_4$, $L_4$, $C_4$ of the RLC circuit of the power-receiving coil 31 are parameters variable at the stage of designing and manufacturing, and are preferably set so as to satisfy the relational expression of (Formula 4) which is described later.

FIG. 1 shows at its bottom a circuit diagram of the wireless power transmission apparatus 1 (including: the stabilizer circuit 7, the charging circuit 8, and the lithium ion secondary battery 9) having the structure as described above. In the figure, the entire wireless power transmission apparatus 1 is shown as a single input impedance $Z_{in}$. Further, the voltage applied to the wireless power transmission apparatus 1 is indicated as voltage $V_{in}$, and the current input to the wireless power transmission apparatus 1 is indicated as current $I_{in}$.

To be more specific about the input impedance $Z_{in}$ of the wireless power transmission apparatus 1, the structure of the wireless power transmission apparatus 1 is expressed in an equivalent circuit as shown in FIG. 2. Based on the equivalent circuit in FIG. 2, the input impedance $Z_{in}$ of the wireless power transmission apparatus 1 is expressed as the (Formula 2).

$$Z_{in} = Z_1 + \cfrac{(\omega M_{12})^2}{Z_2 + \cfrac{(\omega M_{23})^2}{Z_3 + \cfrac{(\omega M_{34})^2}{Z_4 + Z_L}}}$$

$$M_{12} = k_{12}\sqrt{L_1 L_2} \qquad M_{23} = k_{23}\sqrt{L_2 L_3} \qquad M_{34} = k_{34}\sqrt{L_3 L_4}$$

($k_{ij}$ is a coupling coefficient between $L_i$ and $L_j$)

..... (Formula 2)

Further, the impedance $Z_1$, $Z_2$, $Z_3$, $Z_4$, and $Z_L$ of the power-supplying coil 21, the power-supplying resonator 22, the power-receiving resonator 32, and the power-receiving coil 31 in the wireless power transmission apparatus 1 of the present embodiment are expressed as the (Formula 3).

$$Z_1 = R_1 + j\left(\omega L_1 - \frac{1}{\omega C_1}\right)$$

$$Z_2 = R_2 + j\left(\omega L_2 - \frac{1}{\omega C_2}\right)$$

$$Z_3 = R_3 + j\left(\omega L_3 - \frac{1}{\omega C_3}\right)$$

$$Z_4 = R_4 + j\left(\omega L_4 - \frac{1}{\omega C_4}\right)$$

$$Z_L = R_L$$

$$\ldots\ldots \text{(Formula 3)}$$

Introducing the (Formula 3) into the (Formula 2) makes the (Formula 4).

$$Z_{in} = R_1 + j\left(\omega L_1 - \frac{1}{\omega C_1}\right) + \cfrac{(\omega M_{12})^2}{R_2 + j\left(\omega L_2 - \frac{1}{\omega C_2}\right) + \cfrac{(\omega M_{23})^2}{R_3 + j\left(\omega L_3 - \frac{1}{\omega C_3}\right) + \cfrac{(\omega M_{34})^2}{R_4 + j\left(\omega L_4 - \frac{1}{\omega C_4}\right) + R_L}}}$$

$$\ldots\ldots \text{(Formula 4)}$$

With the wireless power transmission apparatus 1, when the resonance frequency of the power-supplying resonator 22 and the resonance frequency of the power-receiving resonator 32 match with each other, a magnetic field resonant state is created between the power-supplying resonator 22 and the power-receiving resonator 32. When a magnetic field resonant state is created between the power-supplying resonator 22 and the power-receiving resonator 32 by having these resonators resonating with each other, power is transmitted from the power-supplying resonator 22 to the power-receiving resonator 32 as magnetic field energy. Then, the power received by the power-receiving resonator 32 is supplied to the lithium ion secondary battery 9 thus charging the same via the power-receiving coil 31, the stabilizer circuit 7, and the charging circuit 8.

(Thermal Control Method for A Wireless Power Transmission Apparatus)

The following describes a thermal control method for the wireless power transmission apparatus 1, based on the structure of the wireless power transmission apparatus 1.

First described is the mechanism of temperature increases in the wireless power transmission apparatus 1 and its counter measure, based on the charging characteristic of the lithium ion secondary battery 9 at the time of charging, the lithium ion secondary battery 9 being a target for supplying power using the wireless power transmission apparatus 1 of the present embodiment.

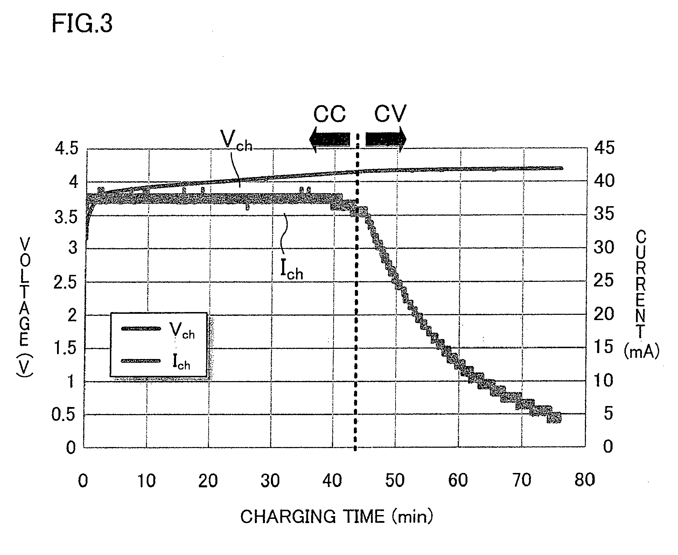

In the present embodiment, the lithium ion secondary battery 9 is used as one of the power-supplied electronic devices 10 to which the power is supplied. To charge the lithium ion secondary battery 9, a constant current/constant voltage charging system is used in general. In this charging of the lithium ion secondary battery 9 with the use of the constant current/constant voltage charging system, the lithium ion secondary battery 9 is charged by a constant current ($I_{ch}$) (CC: Constant Current) for a while after charging is started, as in the charging characteristic of the lithium ion secondary battery 9 shown in FIG. 3. Then, the voltage ($V_{ch}$) to be applied to the lithium ion secondary battery 9 rises up to a predetermined upper limit voltage (4.2 V in the present embodiment), while the charging by the constant current. When the voltage ($V_{ch}$) reaches the upper limit voltage, charging by a constant voltage is performed (CV: Constant Voltage), while the upper limit voltage is maintained. When the charging by the constant voltage (CV) is performed, the value of current ($I_{ch}$) input to the lithium ion secondary battery 9 is attenuated. The charging is completed when the value of the current reaches a predetermined value, or when a predetermined time is elapsed.

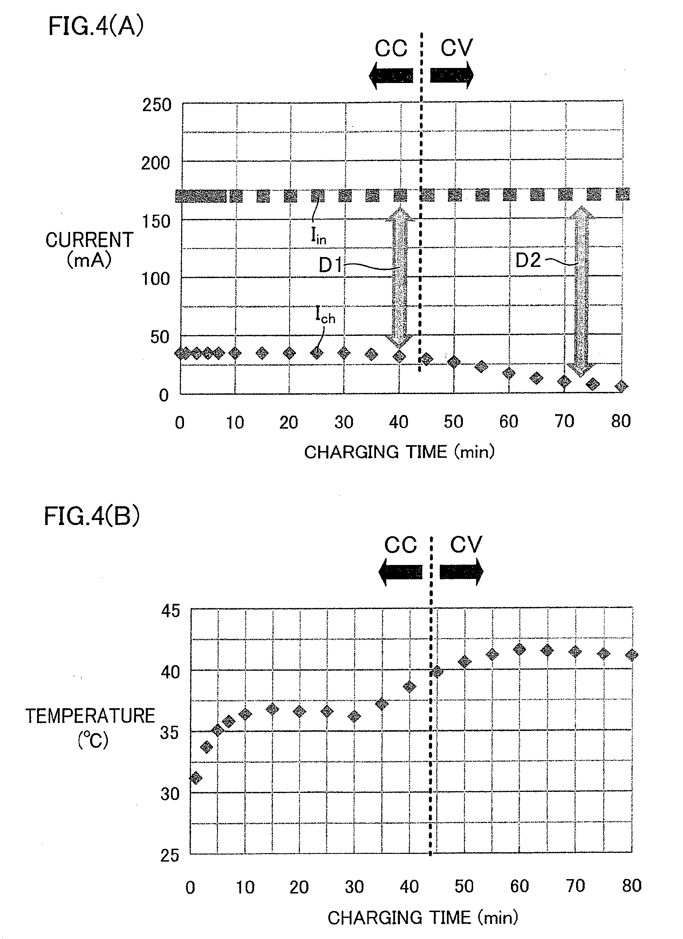

In cases of charging the lithium ion secondary battery 9 by means of the constant current/constant voltage charging system using the wireless power transmission apparatus 1, the current value ($I_{ch}$) input to the lithium ion secondary battery 9 is attenuated, but the current value $I_{in}$ input to the wireless power transmission apparatus 1 is the same, when there is transition from constant current charging (CC) to constant voltage charging (CV), as shown in FIG. 4 (A) which is a graph indicating the current values ($I_{ch}$) input to the lithium ion secondary battery 9 and the current values $I_{in}$ input to the wireless power transmission apparatus 1, at a time of constant current/constant voltage charging.

On the other hand, as shown in FIG. 4(B) which is a graph of variation in the temperatures of the wireless power transmission apparatus 1, at a time of constant current/constant voltage charging, the temperature of the wireless power transmission apparatus 1 rises, when there is transition from constant current charging (CC) to constant voltage charging (CV).

This is thought to be attributed to the following reason. Namely, the difference between the current $I_{in}$ and the current $I_{ch}$ during the constant voltage charging (CV) (see D2 of FIG. 4(A)) is wider spread than the difference between the current $I_{in}$ and the current $I_{ch}$ during the constant current charging (CC) (See D1 of FIG. 4(A)). The difference in the above two differences (i.e., D2 - D1) is consumed in the form of heat generation in the wireless power transmission apparatus 1, consequently giving a rise to the temperature of the wireless power transmission apparatus 1.

An increase in the amount of heat generated in the wireless power transmission apparatus 1 shortens the life of electronic components structuring the wireless power transmission apparatus 1.

In view of the above, in constant current/constant voltage charging of the lithium ion secondary battery 9 using the wireless power transmission apparatus 1, there is a need of restraining the amount of heat generated in the wireless power transmission apparatus 1 when transition occurs from the constant current charging (CC) to constant voltage charging (CV), thereby restraining an increase in the temperature of the wireless power transmission apparatus 1.

Supposing that the voltage Vin is applied to let the current $I_{in}$ flow in the wireless power transmission apparatus 1 for t sec. , the thermal energy J (amount of heat generated) generated in the wireless power transmission apparatus 1 is derived from the (Formula 5) (Joule's law).

$$J = I_{in} \times V_{in} \times t(\text{sec})$$

..... (Formula 5)

The (Formula 6) is a relational expression of the current $I_{in}$, based on the voltage $V_{in}$ and input impedance Zin(see also FIG. 1).

$$I_{in} = \frac{V_{in}}{Z_{in}}$$

..... (Formula 6)

Since, in the present embodiment, the voltage Vin applied to the wireless power transmission apparatus 1 is kept constant (effective value in the present embodiment is 5V) by the AC power source 6, substituting (Formula 6) to the (Formula 5) will lead to a relational expression of the (Formula 7).

$$J = \frac{V_{in}^2}{Z_{in}} \times t(\sec)$$

..... (Formula 7)

Based on the (Formula 7), it is understood that, if the value of the input impedance $Z_{in}$ at a time of constant voltage charging is increased, the amount of heat generated in the wireless power transmission apparatus 1 (the thermal energy J occurring in the wireless power transmission apparatus 1) when transition occurs from the constant current charging (CC) to constant voltage charging (CV) is restrained, which consequently restrain an increase in the temperature of the wireless power transmission apparatus 1.

(Setting of Variation Tendency in Input Impedance $Z_{in}$ in Constant Voltage Charging)

In the present embodiment, to raise the value of the input impedance $Z_{in}$ at a time of constant voltage charging (CV) in cases of performing constant current/constant voltage charging of the lithium ion secondary battery 9 using the wireless power transmission apparatus 1, variable parameters configuring the power-supplying module 2 and the power-receiving module 3 such as the resistance value, inductance, capacity of capacitor, and the coupling coefficients $K_{12}$, $K_{23}$, $K_{34}$ in the $R_1$, $L_1$, and $C_1$ of the RLC circuit of the power-supplying coil 21, the $R_2$, $L_2$, and $C_2$ of the RLC circuit of the power-supplying resonator 22, the $R_3$, $L_3$, and $C_3$ of the RLC circuit of the power-receiving resonator 32, and the $R_4$, $L_4$, $C_4$ of the RLC circuit of the power-receiving coil 31 are suitably set so that the later-described transmission characteristic "S21" of the wireless power transmission apparatus 1 relative to the drive frequency of the power supplied to the wireless power transmission apparatus 1 is made double-hump. With the double-hump transmission characteristic "S21" of the wireless power transmission apparatus 1 relative to the drive frequency of the power supplied to the wireless power transmission apparatus 1, the amount of heat generated in the wireless power transmission apparatus 1 is controlled by adjusting the drive frequency of power supplied to the wireless power transmission apparatus 1 to set the variation tendency in the input impedance values of the wireless power transmission apparatus 1, at the time of constant voltage charging.

(Measurement Experiment)

The following describes, with reference to Measurement Experiments 1 to 3, variation tendencies resulting in the input impedance value of the wireless power transmission apparatus 1 at the time of constant voltage charging, by adjusting the drive frequency of the power supplied to the wireless power transmission apparatus 1, while the transmission characteristic "S21" of the wireless power transmission apparatus 1 relative to the drive frequency of the power to the wireless power transmission apparatus 1 is double-hump.

In the wireless power transmission apparatus 1 used in the Measurement Experiments 1 to 3, the power-supplying coil 21 is constituted by an RLC circuit whose elements include a resistor $R_1$, a coil $L_1$, and a capacitor $C_1$, and the coil diameter is set to 15 mm$\phi$. Similarly, the power-receiving coil 31 is constituted by an RLC circuit whose elements include a resistor $R_4$, a coil $L_4$, and a capacitor $C_4$, and the coil diameter is set to 11 mm$\phi$. Further, the power-supplying resonator 22 is constituted by an RLC circuit whose elements include a resistor $R_2$, a coil $L_2$, and a capacitor $C_2$, and adopts a solenoid coil with its coil diameter set to 15 mm$\phi$. Further, the power-receiving resonator 32 is constituted by an RLC circuit whose elements include a resistor $R_3$, a coil $L_3$, and a capacitor $C_3$, and adopts a solenoid coil with its coil diameter set to 11 mm$\phi$. The values of $R_1$, $R_2$, $R_3$, $R_4$ in the wireless power transmission apparatus 1 used in Measurement Experiments 1 to 3 are set to 0.65$\Omega$, 0.65$\Omega$, 2.47$\Omega$, and 2.3$\Omega$, respectively. Further, the values of $L_1$, $L_2$, $L_3$, $L_4$ are set to 3.1 $\mu$H, 3.1 $\mu$H, 18.4 $\mu$H, and 12.5 $\mu$H, respectively. Further, the coupling coefficients $K_{12}$, $K_{23}$, $K_{34}$ are set to 0.46, 0.20, and 0.52, respectively. The resonance frequency of the power-supplying resonator 22 and that of the power-receiving resonator 32 are 970 kHz.

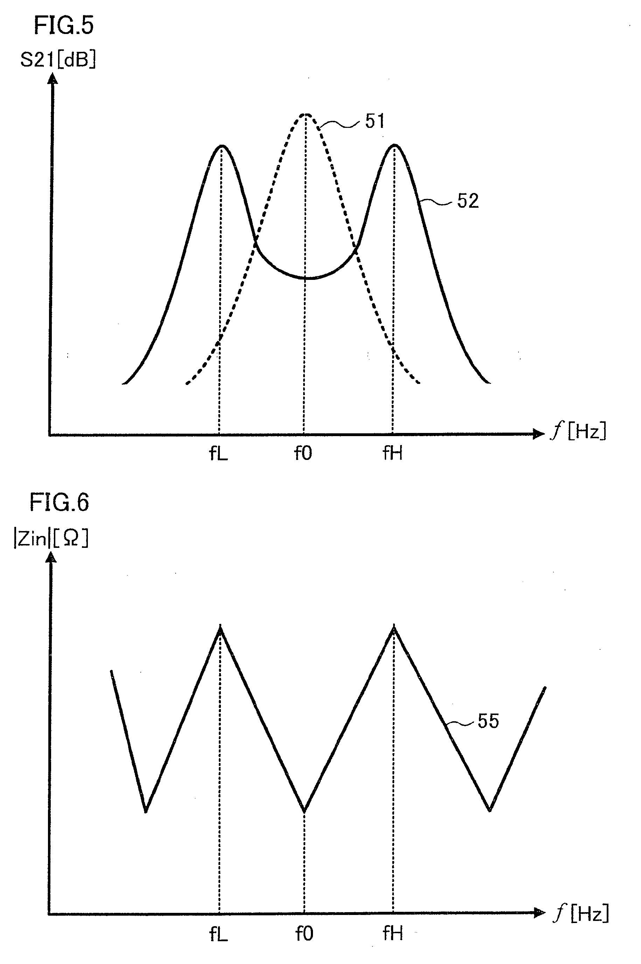

Then, in Measurement Experiments 1 to 3, the wireless power transmission apparatus 1 is set as described above so as to achieve the double-hump characteristic. Then, the lithium ion secondary battery 9 is charged (power is supplied) with the drive frequency of the AC power to the power-supplying module 2 switched among the later-described three states (see FIG. 5, and FIG. 6): i.e., an inphase resonance mode (fL), an antiphase resonance mode (fH), and resonance frequency mode (f0). The current $I_{in}$ and the input impedance $Z_{in}$ are then measured. It should be noted that, in Measurement Experiments 1 to 3, measurement was conducted for the current $I_{in}$ and the input impedance $Z_{in}$, for a charging time (min.), where the input voltage from the AC power source 6 to the wireless power transmission apparatus 1 is Vin = 5V.

(Double-hump Characteristic)

In the Measurement Experiments are used wireless power transmission apparatus 1 with a double-hump transmission characteristic "S21" relative to the drive frequency of the power supplied to the wireless power transmission apparatus 1. The transmission characteristic "S21" is signals measured by a network analyzer (E5061B produced by Agilent Technologies, Inc. and the like) connected to the wireless power transmission apparatus 1, and is indicated in decibel. The greater the value, the higher the power transmission efficiency. The transmission characteristic "S21" of the wireless power transmission apparatus 1 relative to the drive frequency of the power supplied to the wireless power transmission apparatus 1 may have either single-hump or double-hump characteristic, depending on the strength of coupling (magnetic coupling) by the magnetic field between the power-supplying module 2 and the power-receiving module 3. The single-hump characteristic means the transmission characteristic "S21" relative to the drive frequency has a single peak which occurs in the resonance frequency band (f0) (See dotted line 51 FIG. 5). The double-hump characteristic on the other hand means the transmission characteristic "S21" relative to the drive frequency has two peaks, one of the peaks occurring in a drive frequency band lower than the resonance frequency (fL), and the other occurring in a drive frequency band higher than the resonance frequency (fH) (See solid line 52 in FIG. 5) . The double-hump characteristic, to be more specific, means that the reflection characteristic "S11" measured with the network analyzer connected to the wireless power transmission apparatus 1 has two peaks. Therefore, even if the transmission characteristic "S21" relative to the drive frequency appears to have a single peak, the transmission characteristic "S21" has a double-hump characteristic if the reflection characteristic "S11" measured has two peaks. It should be noted that the power transmission efficiency is a rate of power received by the power-receiving module 3, relative to the power supplied to the power-supplying module 2.

In a wireless power transmission apparatus 1 having the single-hump characteristic, the transmission characteristic "S21" is maximized (power transmission efficiency is maximized) when the drive frequency is at the resonance frequency f0, as indicated by the dotted line 51 of FIG. 5.

On the other hand, in a wireless power transmission apparatus 1 having the double-hump characteristic, the transmission characteristic "S21" is maximized in a drive frequency band (fL) lower than the resonance frequency f0, and in a drive frequency band (fH) higher than the resonance frequency f0, as indicated by the solid line 52 of FIG. 5.

It should be noted that, in general, if the distance between a power-supplying resonator and a power-receiving resonator is the same, the maximum value of the transmission characteristic "S21" having the double-hump characteristic (the value of the transmission characteristic "S21" at fL or fH) is lower than the value of the maximum value of the transmission characteristic "S21" having the single-hump characteristic (value of the transmission characteristic "S21" at f0) (See graph in FIG. 5).

Specifically, in cases of double-hump characteristic, when the drive frequency of the AC power to the power-supplying module 2 is set to the frequency fL nearby the peak on the low frequency side (inphase resonance mode), the power-supplying resonator 22 and the power-receiving resonator 32 are resonant with each other in inphase, and the current in the power-supplying resonator 22 and the current in the power-receiving resonator 32 both flow in the same direction. As the result, as shown in the graph of FIG. 5, the value of the transmission characteristic "S21" is made relatively high, even if the drive frequency does not match with the resonance frequency of the power-supplying resonator 22 of the power-supplying module 2 and the power-receiving resonator 32 of the power-receiving module 3, although the value still may not be as high as that of the transmission characteristic "S21" in wireless power transmission apparatuses in general aiming at maximizing the power transmission efficiency (see dotted line 51). It should be noted that the resonance state in which the current in the coil (power-supplying resonator 22) of the power-supplying module 2 and the current in the coil (power-receiving resonator 32) of the power-receiving module 3 both flow in the same direction is referred to as inphase resonance mode.

Further, in the inphase resonance mode, because the magnetic field generated on the outer circumference side of the power-supplying resonator 22 and the magnetic field generated on the outer circumference side of the power-receiving resonator 32 cancel each other out, the magnetic field spaces each having a lower magnetic field strength than the magnetic field strengths in positions not on the outer circumference sides of the power-supplying resonator 22 and the power-receiving resonator 32 (e.g., the magnetic field strengths on the inner circumference sides of the power-supplying resonator 22 and the power-receiving resonator 32) are formed on the outer circumference sides of the power-supplying resonator 22 and the power-receiving resonator 32, as the influence of the magnetic fields is lowered. When a stabilizer circuit 7, a charging circuit 8, a rechargeable battery 9, and the like desired to have less influence of the magnetic field is placed in this magnetic field space, occurrence of Eddy Current attributed to the magnetic field is restrained or prevented. This restrains negative effects due to generation of heat.

On the other hand, in cases of double-hump characteristic, when the drive frequency of the AC power to the power-supplying module 2 is set to the frequency fH nearby the peak on the side of the high frequency side (antiphase resonance mode), the power-supplying resonator 22 and the power-receiving resonator 32 resonate with each other in antiphase, and the current in the power-supplying resonator 22 and the current in the power-receiving resonator 32 flow opposite directions to each other. As the result, as shown in the graph of FIG. 5, the value of the transmission characteristic "S21" is made relatively high, even if the drive frequency does not match with the resonance frequency of the power-supplying resonator 22 of the power-supplying module 2 and the power-receiving resonator 32 of the power-receiving module 3, although the value still may not be as high as that of the transmission characteristic "S21" in wireless power transmission apparatuses in general aiming at maximizing the power transmission efficiency (see dotted line 51) . The resonance state in which the current in the coil (power-supplying resonator 22) of the power-supplying module 2 and the current in the coil (power-receiving resonator 32) of the power-receiving module 3 flow opposite directions to each other is referred to as antiphase resonance mode.

Further, in the antiphase resonance mode, because the magnetic field generated on the inner circumference side of the power-supplying resonator 22 and the magnetic field generated on the inner circumference side of the power-receiving resonator 32 cancel each other out, the magnetic field spaces each having a lower magnetic field strength than the magnetic field strengths in positions not on the inner circumference side of the power-supplying resonator 22 and the power-receiving resonator 32 (e.g., the magnetic field strengths on the outer circumference side of the power-supplying resonator 22 and the power-receiving resonator 32) are formed on the outer circumference sides of the power-supplying resonator 22 and the power-receiving resonator 32, as the influence of the magnetic fields is lowered. When a stabilizer circuit 7, a charging circuit 8, a rechargeable battery 9, and the like desired to have less influence of the magnetic field is placed in this magnetic field space, occurrence of Eddy Current attributed to the magnetic field is restrained or prevented. This restrains negative effects due to generation of heat. Further, since the magnetic field space formed in this antiphase resonance mode is formed on the inner circumference side of the power-supplying resonator 22 and the power-receiving resonator 32, assembling the electronic components such as the stabilizer circuit 7, the charging circuit 8, the rechargeable battery 9, and the like within this space makes the wireless power transmission apparatus 1 itself more compact, and improves the freedom in designing.

Further, when the transmission characteristic "S21" of the wireless power transmission apparatus 1 relative to the drive frequency of the power supplied to the wireless power transmission apparatus 1 has the double-hump characteristic, and when the drive frequency of the AC power to the power-supplying module 2 is set to the inphase resonance mode (fL) or the antiphase resonance mode (fH), it is possible to maximize the value of the input impedance $Z_{in}$ of the wireless power transmission apparatus 1, while maintaining a high power transmission efficiency, as shown in FIG. 6 (See solid line 55). Further, when the drive frequency of the AC power to the power-supplying module 2 is set to the resonance frequency (f0), it is possible to minimize the value of the input impedance $Z_{in}$ of the wireless power transmission apparatus 1, as shown in FIG. 6 (See solid line 55). In Measurement Experiments 1 to 3, the lithium ion secondary battery 9 is charged (power is supplied) with the drive frequency of the AC power to the power-supplying module 2 switched among the three states : i.e., an inphase resonance mode (fL), an antiphase resonance mode (fH), and resonance frequency mode (f0). The current $I_{in}$ and the input impedance $Z_{in}$ are then measured.

In the present embodiment, as long as the transmission characteristic "S21" of the wireless power transmission apparatus 1 relative to the drive frequency of the power supplied to the wireless power transmission apparatus 1 has the double-hump characteristic, the settings and combinations of the variable parameters configuring the power-supplying module 2 and the power-receiving module 3 fall within design matters and are freely modifiable, the variable parameters including: the resistance value, inductance, capacity of capacitor, and the coupling coefficients $K_{12}$, $K_{23}$, $K_{34}$ in the $R_1$, $L_1$, and $C_1$ of the RLC circuit of the power-supplying coil 21, the $R_2$, $L_2$, and $C_2$ of the RLC circuit of the power-supplying resonator 22, the $R_3$, $L_3$, and $C_3$ of the RLC circuit of the power-receiving resonator 32, and the $R_4$, $L_4$, $C_4$ of the RLC circuit of the power-receiving coil 31.

(Measurement Experiment 1: Drive Frequency set in Inphase Resonance Mode)

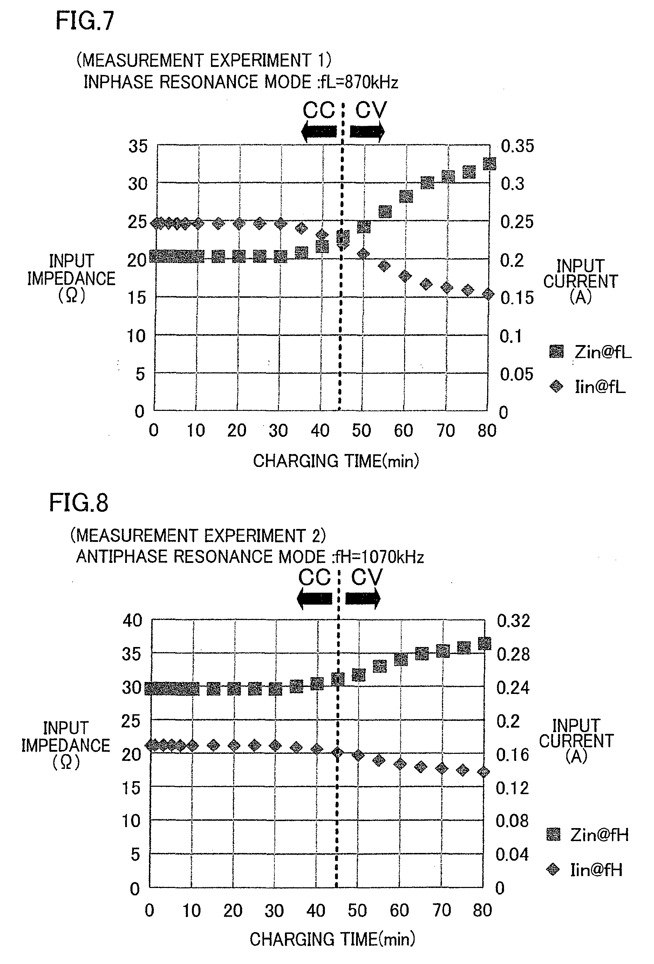

In Measurement Experiment 1 with the double-hump characteristic, the drive frequency of the AC power to the power-supplying module 2 was set to the frequency fL nearby the peak on the low frequency side (inphase resonance mode: fL = 870 kHz). Then, the input current $I_{in}$ and the input impedance $Z_{in}$ relative to the charging time (min.) were measured in this setting. The measurement results are shown in FIG. 7. It should be noted that the input voltage $V_{in}$ was 5V (constant).

From the measurement results shown in FIG. 7, it is understood that the value of the input impedance $Z_{in}$ has a tendency to rise, when there is transition from constant current charging (CC) to constant voltage charging (CV). It is further understood that, while the value of the input impedance $Z_{in}$ has the tendency to rise, the value of the input current Input current $I_{in}$ has a tendency to fall (See Formula 6).

Thus, the following is found from the above Measurement Experiment 1. Namely, by setting the transmission characteristic "S21" of the wireless power transmission apparatus 1 relative to the drive frequency of the power supplied to the wireless power transmission apparatus 1 so as to have the double-hump characteristic, and by setting the drive frequency of the AC power to the power-supplying module 2 to the frequency fL nearby the peak on the low frequency side of the double-hump characteristic, it is possible to cause the value of the input impedance $Z_{in}$ to have a tendency to rise, when there is transition from constant current charging (CC) to constant voltage charging (CV). This reduces the input current $I_{in}$ to the wireless power transmission apparatus 1 at a time of constant voltage charging (CV), consequently reducing generation of heat in the wireless power transmission apparatus 1.

(Measurement Experiment 2: Drive Frequency set in Antiphase Resonance mode)

In Measurement Experiment 2 with the double-hump characteristic, the drive frequency of the AC power to the power-supplying module 2 was set to the frequency fH nearby the peak on the high frequency side (antiphase resonance mode: fH = 1070 kHz). Then, the input current $I_{in}$ and the input impedance $Z_{in}$ relative to the charging time (min.) were measured in this setting. The measurement results are shown in FIG. 8. It should be noted that the input voltage $V_{in}$ was 5V (constant).

From the measurement results shown in FIG. 8, it is understood that the value of the input impedance $Z_{in}$ has a tendency to rise, when there is transition from constant current charging (CC) to constant voltage charging (CV). It is further understood that, while the value of the input impedance $Z_{in}$ has the tendency to rise, the value of the input current Input current $I_{in}$ has a tendency to fall (See Formula 6).

Thus, the following is found from the above Measurement Experiment 2. Namely, by setting the transmission characteristic "S21" of the wireless power transmission apparatus 1 relative to the drive frequency of the power supplied to the wireless power transmission apparatus 1 so as to have the double-hump characteristic, and by setting the drive frequency of the AC power to the power-supplying module 2 to the frequency fH nearby the peak on the high frequency side of the double-hump characteristic, it is possible to cause the value of the input impedance $Z_{in}$ to have a tendency to rise, when there is transition from constant current charging (CC) to constant voltage charging (CV). This reduces the input current $I_{in}$ to the wireless power transmission apparatus 1 at a time of constant voltage charging (CV), consequently reducing generation of heat in the wireless power transmission apparatus 1.

(Measurement Experiment 3: Drive Frequency set to Resonance frequency)

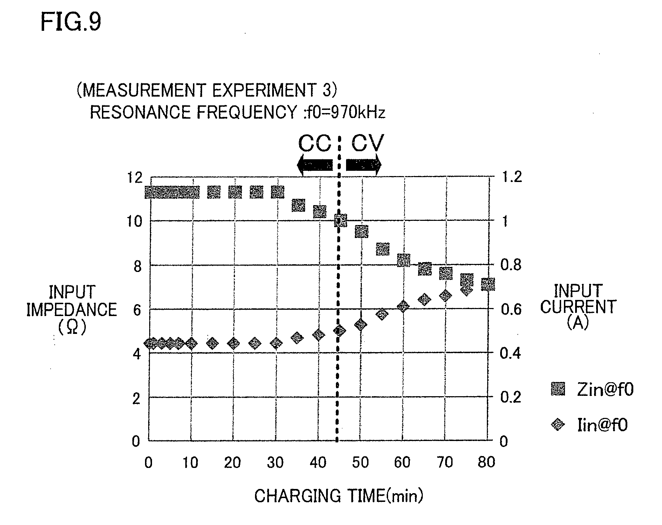

In Measurement Experiment 3 with the double-hump characteristic, the drive frequency of the AC power to the power-supplying module 2 was set to the resonance frequency f0 (resonance frequency: f0 = 970 kHz) . Then, the input current Iin and the input impedance $Z_{in}$ relative to the charging time (min.) were measured in this setting. The measurement results are shown in FIG. 9. It should be noted that the input voltage Vin was 5V (constant).

From the measurement results shown in FIG. 9, it is understood that the value of the input impedance $Z_{in}$ has a tendency to fall, when there is transition from constant current charging (CC) to constant voltage charging (CV). It is further understood that, while the value of the input impedance $Z_{in}$ has the tendency to fall, the value of the input current Input current $I_{in}$ has a tendency to rise (See Formula 6).

Thus, the following is found from the above Measurement Experiment 3. Namely, by setting the transmission characteristic "S21" of the wireless power transmission apparatus 1 relative to the drive frequency of the power supplied to the wireless power transmission apparatus 1 so as to have the double-hump characteristic, and by setting the drive frequency of the AC power to the power-supplying module 2 to the resonance frequency f0 of the double-hump characteristic, it is possible to cause the value of the input impedance $Z_{in}$ to have a tendency to fall, when there is transition from constant current charging (CC) to constant voltage charging (CV).

Thus, the following is understood from the above Measurement Experiments 1 to 3. Namely, by setting the transmission characteristic "S21" of the wireless power transmission apparatus 1 relative to the drive frequency of the power supplied to the wireless power transmission apparatus 1 so as to have the double-hump characteristic, and by adjusting the drive frequency of the AC power to the power-supplying module 2, it is possible to set the variation tendencies of the input impedance $Z_{in}$ of the wireless power transmission apparatus 1 at a time of constant voltage charging, and adjust the variation tendencies of the input current $I_{in}$ of the wireless power transmission apparatus 1, consequently enabling control of heat generation in the wireless power transmission apparatus 1. It should be noted that, based on the Measurement Experiments 1 to 3, if the drive frequency of the AC power supplied to the power-supplying module 2 is set to a predetermined value between the inphase resonance mode fL and the resonance frequency f0, or between the resonance frequency f0 and the antiphase resonance mode fH, it is possible to maintain a constant value of the input impedance $Z_{in}$ of the wireless power transmission apparatus 1 at a time of constant voltage charging.

As described hereinabove, in the above method for cases where a wireless power transmission apparatus 1 configured to supply power by means of resonance phenomenon is used to charge a lithium ion secondary battery 9 rechargeable with a use of a constant current/constant voltage charging system, variable parameters configuring the power-supplying module 2 and the power-receiving module 3 in the wireless power transmission apparatus 1 are set so that the value of transmission characteristic with respect to the drive frequency of the power supplied to the power-supplying module 2 has a double-hump characteristic having a peak in a lower drive frequency band (fL) than a resonance frequency (f0) in the power-supplying module 2 and the power-receiving module 3 , and a peak in a higher drive frequency band (fH) than the resonance frequency (f0). This enables control of heat generation in the wireless power transmission apparatus 1, by adjusting the drive frequency of power supplied to such a wireless power transmission apparatus 1 with the double-hump characteristic, to set the variation tendency in the value of the input impedance $Z_{in}$ of the wireless power transmission apparatus 1 thus adjusting the variation tendency in the input current $I_{in}$ to the wireless power transmission apparatus 1, at a time of constant voltage charging.

Further, by setting the drive frequency of the power supplied to the power-supplying module 2 to a band corresponding to a peak value (fL) of the transmission characteristic occurring in the lower drive frequency band than the resonance frequency (f0) in the power-supplying module 2 and the power-receiving module 3, the value of the input impedance $Z_{in}$ of the wireless power transmission apparatus 1 at a time of constant voltage charging is adjusted to have a tendency to rise. This reduces the input current $I_{in}$ to the wireless power transmission apparatus 1 at a time of constant voltage charging, consequently reducing generation of heat in the wireless power transmission apparatus 1.

Further, by setting the drive frequency of the power supplied to the power-supplying module 2 to a band corresponding to a peak value (fH) of the transmission characteristic occurring in the higher drive frequency band than the resonance frequency (f0) in the power-supplying module 2 and the power-receiving module 3, the value of the input impedance $Z_{in}$ of the wireless power transmission apparatus 1 at a time of constant voltage charging is adjusted to have a tendency to rise. This reduces the input current $I_{in}$ to the wireless power transmission apparatus 1 at a time of constant voltage charging, consequently reducing generation of heat in the wireless power transmission apparatus 1.

Further, by setting the drive frequency of the power supplied to the power-supplying module 2 to a band corresponding to valley between a peak value (fL) and a peak value (fH) of the transmission characteristic occurring in the lower drive frequency band and the higher frequency band than the resonance frequency (f0) in the power-supplying module 2 and the power-receiving module 3, the value of the input impedance $Z_{in}$ of the wireless power transmission apparatus 1 at a time of constant voltage charging is adjusted to have a tendency to stay the same or fall. This maintains or raises the input current $I_{in}$ to the wireless power transmission apparatus 1, at a time of constant voltage charging.

(Manufacturing Method)

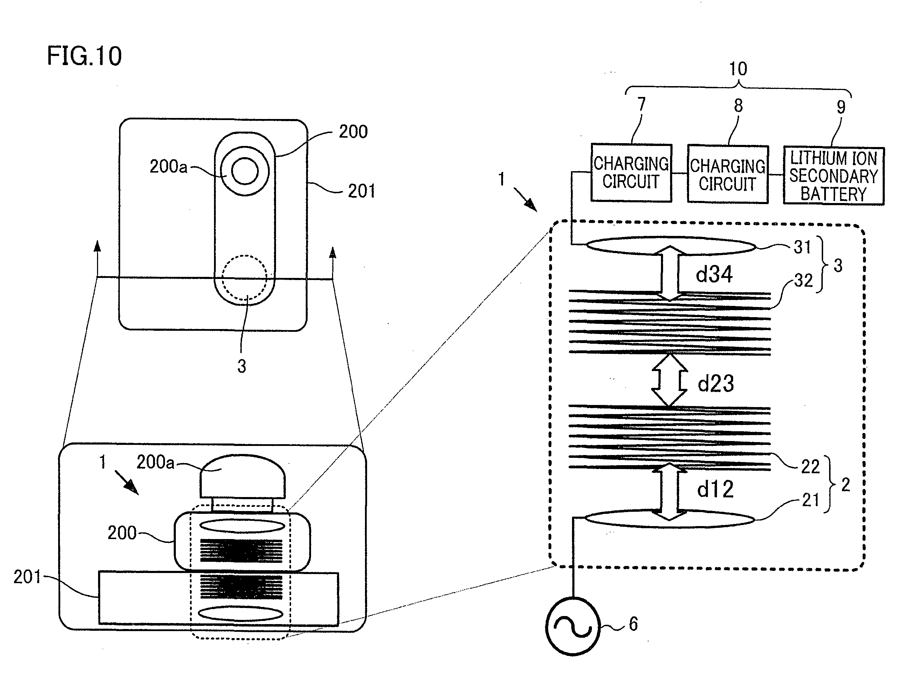

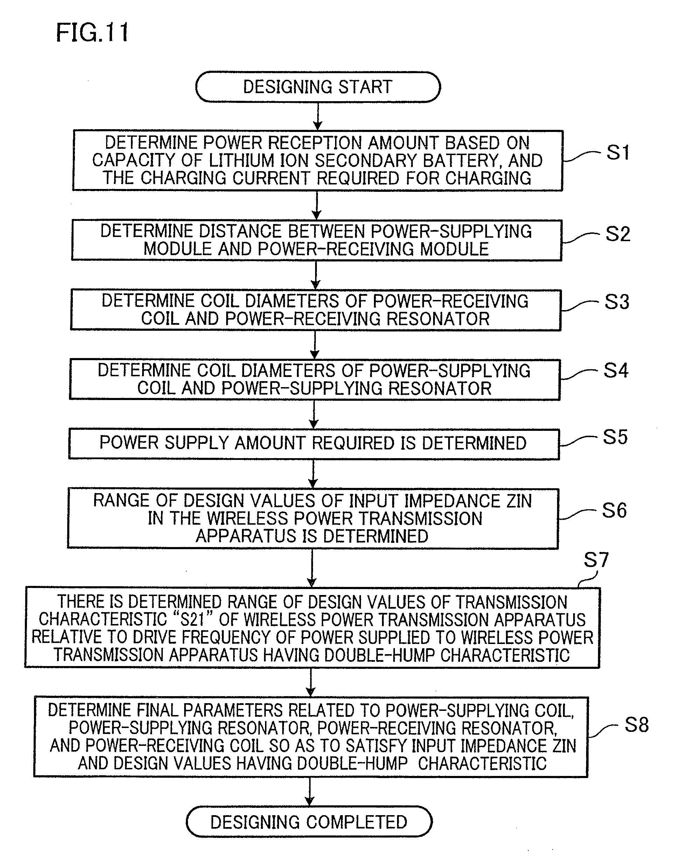

Next, the following describes with reference to FIG. 10 and FIG. 11 a design method (design process) which is a part of manufacturing process of the wireless power transmission apparatus 1. In the following description, a wireless headset 200 having a earphone speaker unit 200a, and a charger 201 are described as a portable device having the wireless power transmission apparatus 1 (see FIG. 10).

The wireless power transmission apparatus 1 to be designed in the design method is mounted in a wireless headset 200 and a charger 201 shown in FIG. 10, in the form of a power-receiving module 3 (a power-receiving coil 31 and a power-receiving resonator 32) and a power-supplying module 2 (a power-supplying coil 21 and a power-supplying resonator 22), respectively. For the sake of convenience, FIG. 10 illustrates the stabilizer circuit 7, the charging circuit 8, and the lithium ion secondary battery 9 outside the power-receiving module 3; however, these are actually disposed on the inner circumference side of the power-receiving coil 31 and the solenoid coil of the power-receiving resonator 32. That is, the wireless headset 200 includes the power-receiving module 3, the stabilizer circuit 7, the charging circuit 8, and the lithium ion secondary battery 9, and the charger 201 has a power-supplying module 2. While in use, the power-supplying coil 21 of the power-supplying module 2 is connected to an AC power source 6.

(Design Method)

First, as shown in FIG. 11, a power reception amount in the power-receiving module 3 is determined based on the capacity of the lithium ion secondary battery 9 , and the charging current required for charging the lithium ion secondary battery 9 (S1).

Next, the distance between the power-supplying module 2 and the power-receiving module 3 is determined (S2). The distance is the distance d23 between the power-supplying resonator 22 and the power-receiving resonator 32, while the wireless headset 200 having therein the power-receiving module 3 is placed on the charger 201 having therein the power-supplying module 2, i.e. , during the charging state. To be more specific, the distance d23 between the power-supplying resonator 22 and the power-receiving resonator 32 is determined, taking into account the shapes and the structures of the wireless headset 200 and the charger 201.

Further, based on the shape and the structure of the wireless headset 200, the coil diameters of the power-receiving coil 31 in the power-receiving module 3 and the coil of the power-receiving resonator 32 are determined (S3).

Further, based on the shape and the structure of the charger 201, the coil diameters of the power-supplying coil 21 in the power-supplying module 2 and the coil of the power-supplying resonator 22 are determined (S4).

Through the steps of S2 to S4, the coupling coefficient $K_{23}$ and the power transmission efficiency between the power-supplying resonator 22 (coil $L_2$) of the wireless power transmission apparatus 1 and the power-receiving resonator 32 (coil $L_3$) are determined.

Based on the power reception amount in the power-receiving module 3 determined in S1 and on the power transmission efficiency determined through S2 to S4, the minimum power supply amount required for the power-supplying module 2 is determined (S5).

Then, a range of the design values of the input impedance $Z_{in}$ in the wireless power transmission apparatus 1 is determined, taking into account the power reception amount in the power-receiving module 3, the power transmission efficiency, and the minimum power supply amount required to the power-supplying module 2 (S6).

Further, there is determined a range of design values of the transmission characteristic "S21" of the wireless power transmission apparatus 1 relative to the drive frequency of the power supplied to the wireless power transmission apparatus 1 having the double-hump characteristic (S7).

Then, final parameters related to the power-supplying coil 21, the power-supplying resonator 22, the power-receiving resonator 32, and the power-receiving coil 31 are determined so as to satisfy the design values of the input impedance $Z_{in}$ and the double-hump characteristic determined in S6 and S7 (S8). The parameters related to the power-supplying coil 21, the power-supplying resonator 22, the power-receiving resonator 32, and the power-receiving coil 31 include: the resistance value, inductance, capacity of capacitor, and the coupling coefficients $K_{12}$, $K_{23}$, $K_{34}$ in the $R_1$, $L_1$, and $C_1$ of the RLC circuit of the power-supplying coil 21, the $R_2$, $L_2$, and $C_2$ of the RLC circuit of the power-supplying resonator 22, the $R_3$, $L_3$, and $C_3$ of the RLC circuit of the power-receiving resonator 32, and the $R_4$, $L_4$, $C_4$ of the RLC circuit of the power-receiving coil 31; the distance d12 between the power-supplying coil 21 and the power-supplying resonator 22; and the distance between the power-receiving resonator 32 and the power-receiving coil 31.

The above-described manufacturing method of the wireless power transmission apparatus 1 including the above design method enables manufacturing of a wireless power transmission apparatus 1 that allows control of heat generation in the wireless power transmission apparatus 1 by adjusting the drive frequency of power supplied to the power-supplying module 2. In other words, a wireless power transmission apparatus 1 capable of controlling heat generation therein is possible without a need of an additional component in the wireless power transmission apparatus 1.

(Other Embodiments)

Although the above description of the manufacturing method deals with a wireless headset 200 as an example, the method is applicable to any devices having a secondary battery; e. g. , tablet PCs, digital cameras, mobile phones, earphone-type music player, hearing aids, and sound collectors.

Further, although the above description assumes the wireless power transmission apparatus 1 is mounted in a portable electronic device, the use of such an apparatus is not limited to small devices. For example, with a modification to the specifications according to the required power amount, the wireless power transmission apparatus 1 is mountable to a relatively large system such as a wireless charging system in an electronic vehicle (EV), or to an even smaller device such as a wireless endoscope for medical use.

Although the above descriptions have been provided with regard to the characteristic parts so as to understand the present invention more easily, the invention is not limited to the embodiments and the examples as described above and can be applied to the other embodiments and examples, and the applicable scope should be construed as broadly as possible. Furthermore, the terms and phraseology used in the specification have been used to correctly illustrate the present invention, not to limit it. In addition, it will be understood by those skilled in the art that the other structures, systems, methods and the like included in the spirit of the present invention can be easily derived from the spirit of the invention described in the specification. Accordingly, it should be considered that the present invention covers equivalent structures thereof without departing from the spirit and scope of the invention as defined in the following claims. In addition, it is required to sufficiently refer to the documents that have been already disclosed, so as to fully understand the objects and effects of the present invention.

Reference Signs List

1:      Wireless Power Transmission Apparatus
2:      Power-Supplying Module
3:      Power-Receiving Module
6:      AC power source
7:      Stabilizer Circuit
8:      Charging Circuit
9:      Lithium Ion Secondary Battery
10:     Power-Supplied Electronic Device
21:     Power-Supplying Coil

22:     Power-Supplying Resonator
31:     Power-Receiving Coil
32:     Power-Receiving Resonator
200:    Wireless Headset
201:    Charger

**Claims**

1. A method of forming an electromagnetic space, comprising the step of,
a thermal control method for a wireless power transmission apparatus which supplies power, by means of resonance phenomenon, from a power-supplying module having at least a power-supplying coil and a power-supplying resonator to a power-receiving module having at least power-receiving resonator and a power-receiving coil, and connected to a power-supplied electronic device having a secondary battery rechargeable with a use of a constant current/constant voltage charging system, comprising:

   setting variable parameters configuring the power-supplying module and the power-receiving module so that a value of transmission characteristic relative to a drive frequency of the power supplied to the power-supplying module has a double-hump characteristic has a peak in a lower drive frequency band than a resonance frequency in the power-supplying module and the power-receiving module, and a peak in a higher drive frequency band than the resonance frequency, thereby
   enabling control of heat generation in the wireless power transmission apparatus, by adjusting the drive frequency to set a variation tendency in input impedance values of the wireless power transmission apparatus at a time of constant voltage charging to adjust variation tendency of the input current to the wireless power transmission apparatus.

2. The method according to claim 1, wherein,
the drive frequency of the power supplied to the power-supplying module is set to a band corresponding to a peak value of the transmission characteristic occurring in the lower drive frequency band than the resonance frequency in the power-supplying module and the power-receiving module, and the input impedance value of the wireless power transmission apparatus at a time of constant voltage charging is adjusted to have a tendency to rise.

3. The method according to claim 1, wherein,
the drive frequency of the power supplied to the power-supplying module is set to a band corresponding to a peak value of the transmission characteristic occurring in the higher drive frequency band than the resonance frequency in the power-supplying module and the power-receiving module, and the input impedance value of the wireless power transmission apparatus at a time of constant voltage charging is adjusted to have a tendency to rise.

4. The method according to claim 1, wherein,
the drive frequency of the power supplied to the power-supplying module is set to a band corresponding to a valley between peak values of the transmission characteristic occurring in the lower drive frequency band and the higher frequency band than the resonance frequency in the power-supplying module and the power-receiving module, and the input impedance value of the wireless power transmission apparatus at a time of constant voltage charging is adjusted to have a tendency to stay the same or fall.

5. A wireless power transmission apparatus adjusted by the thermal control method for a wireless power transmission apparatus according to any one of claims 1 to 4.

6. A manufacturing method for a wireless power transmission apparatus which supplies power, by means of resonance phenomenon, from a power-supplying module having at least a power-supplying coil and a power-supplying resonator to a power-receiving module having at least power-receiving resonator and a power-receiving coil, and connected to a power-supplied electronic device having a secondary battery rechargeable with a use of a constant current/constant voltage charging system, the method comprising:

   setting variable parameters configuring the power-supplying module and the power-receiving module so that a value of transmission characteristic relative to a drive frequency of the power supplied to the power-supplying module has a double-hump characteristic has a peak in a lower drive frequency band than a resonance frequency in the power-supplying module and the power-receiving module, and a peak in a higher drive frequency band than the resonance frequency, thereby
enabling control of heat generation in the wireless power transmission apparatus, by adjusting the drive frequency to set a variation tendency in input impedance values of the wireless power transmission apparatus at a time of constant voltage charging to adjust variation tendency of the input current to the wireless power transmission apparatus.

FIG.1

$$I_{in} = V_{in} / Z_{in}$$

FIG.2

FIG.3

## FIG.4(A)

## FIG.4(B)

FIG.5

S21[dB]

~ 51

~ 52

$f$[Hz]

fL    f0    fH

FIG.6

|Zin|[Ω]

~ 55

$f$[Hz]

fL    f0    fH

## FIG.7

(MEASUREMENT EXPERIMENT 1)
INPHASE RESONANCE MODE :fL=870kHz

## FIG.8

(MEASUREMENT EXPERIMENT 2)
ANTIPHASE RESONANCE MODE :fH=1070kHz

FIG.9

(MEASUREMENT EXPERIMENT 3)
RESONANCE FREQUENCY :f0=970kHz

FIG.10

EP 2 869 432 A1

## FIG.11

```
               ┌─────────────────────────┐
               │    DESIGNING START      │
               └─────────────────────────┘
                            │
                            ▼
  ┌─────────────────────────────────────────────────┐
  │ DETERMINE POWER RECEPTION AMOUNT BASED ON        │ ── S1
  │ CAPACITY OF LITHIUM ION SECONDARY BATTERY, AND   │
  │ THE CHARGING CURRENT REQUIRED FOR CHARGING       │
  └─────────────────────────────────────────────────┘
                            │
                            ▼
  ┌─────────────────────────────────────────────────┐
  │ DETERMINE DISTANCE BETWEEN POWER-SUPPLYING       │ ── S2
  │ MODULE AND POWER-RECEIVING MODULE                │
  └─────────────────────────────────────────────────┘
                            │
                            ▼
  ┌─────────────────────────────────────────────────┐
  │ DETERMINE COIL DIAMETERS OF POWER-RECEIVING      │ ── S3
  │ COIL AND POWER-RECEIVING RESONATOR               │
  └─────────────────────────────────────────────────┘
                            │
                            ▼
  ┌─────────────────────────────────────────────────┐
  │ DETERMINE COIL DIAMETERS OF POWER-SUPPLYING      │ ── S4
  │ COIL AND POWER-SUPPLYING RESONATOR               │
  └─────────────────────────────────────────────────┘
                            │
                            ▼
  ┌─────────────────────────────────────────────────┐
  │ POWER SUPPLY AMOUNT REQUIRED IS DETERMINED       │ ── S5
  └─────────────────────────────────────────────────┘
                            │
                            ▼
  ┌─────────────────────────────────────────────────┐
  │ RANGE OF DESIGN VALUES OF INPUT IMPEDANCE ZIN    │ ── S6
  │ IN THE WIRELESS POWER TRANSMISSION               │
  │ APPARATUS IS DETERMINED                          │
  └─────────────────────────────────────────────────┘
                            │                          S7
                            ▼
  ┌──────────────────────────────────────────────────────┐
  │ THERE IS DETERMINED RANGE OF DESIGN VALUES OF         │
  │ TRANSMISSION CHARACTERISTIC "S21" OF WIRELESS POWER   │
  │ TRANSMISSION APPARATUS RELATIVE TO DRIVE FREQUENCY    │
  │ OF POWER SUPPLIED TO WIRELESS POWER TRANSMISSION      │
  │ APPARATUS HAVING DOUBLE-HUMP CHARACTERISTIC           │
  └──────────────────────────────────────────────────────┘
                            │
                            ▼
  ┌──────────────────────────────────────────────────────┐
  │ DETERMINE FINAL PARAMETERS RELATED TO POWER-          │ ── S8
  │ SUPPLYING COIL, POWER-SUPPLYING RESONATOR,            │
  │ POWER-RECEIVING RESONATOR, AND POWER-RECEIVING        │
  │ COIL SO AS TO SATISFY INPUT IMPEDANCE ZIN AND         │
  │ DESIGN VALUES HAVING DOUBLE-HUMP CHARACTERISTIC       │
  └──────────────────────────────────────────────────────┘
                            │
                            ▼
               ┌─────────────────────────┐
               │   DESIGNING COMPLETED   │
               └─────────────────────────┘
```

## INTERNATIONAL SEARCH REPORT

International application No.

PCT/JP2014/053066

A. CLASSIFICATION OF SUBJECT MATTER

*H02J17/00*(2006.01)i, *H01M10/46*(2006.01)i, *H02J7/00*(2006.01)i

According to International Patent Classification (IPC) or to both national classification and IPC

B. FIELDS SEARCHED

Minimum documentation searched (classification system followed by classification symbols)
H01M10/42-10/48; H02J7/00-7/12, 7/34-7/36, 17/00;

Documentation searched other than minimum documentation to the extent that such documents are included in the fields searched

| | | |
|---|---|---|
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2012-135127 A  (Panasonic Corp.), 12 July 2012 (12.07.2012), entire text; all drawings (Family: none) | 1-6 |
| A | JP 2007-14163 A  (Fujitsu Ltd.), 18 January 2007 (18.01.2007), entire text; all drawings & US 2007/0001646 A1   & EP 1775820 A2 | 1-6 |

☐ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 16 April, 2014 (16.04.14) | 28 April, 2014 (28.04.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**EP 2 869 432 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4624768 B

- JP 2010239769 A